# EUROPÄISCHE PATENTSCHRIFT

(11) **EP 2 802 801 B1**
(45) Veröffentlichungstag und Bekanntmachung des Hinweises auf die Patenterteilung: **14.10.2015**
(21) Anmeldenummer: 13700453.7
(22) Anmeldetag: 07.01.2013
(51) Int. Cl.: F16L 37/084, F16L 37/098

(54) **LÖSBARE STECKVERBINDUNG**
DETACHABLE PLUG CONNECTION
CONNEXION PAR ENFICHAGE LIBÉRABLE

(30) Priorität: 13.01.2012 DE 202012000597 U; 30.11.2012 DE 202012011531 U
(43) Veröffentlichungstag der Anmeldung: 19.11.2014
(73) Patentinhaber: Neoperl GmbH, 79379 Müllheim (DE)
(72) Erfinder: KURY, Werner, 79379 Müllheim (DE)
(74) Vertreter: Börjes-Pestalozza, Henrich
(86) Internationale Anmeldenummer: PCT/EP2013/000019
(87) Internationale Veröffentlichungsnummer: WO 2013/104533

(56) Entgegenhaltungen:
- EP-B1- 0 605 801
- WO-A1-02/079684

## Beschreibung

Die Erfindung betrifft eine lösbare Steckverbindung mit einem rohrförmigen Einsteckteil, das an seinem Außenumfang zumindest einen Haltevorsprung trägt, mit einem hülsenförmigen Aufnahmeteil, dessen Innenraum zum Einführen des rohrförmigen Einsteckteils bestimmt ist und mit einem mit dem Aufnahmeteil verbundenen Verbindungselement, an dem wenigstens eine nach innen gerichtete Haltekante aufbiegbar oder aufschwenkbar gehalten ist, welche den Haltevorsprung nach dem Eindrücken des Einsteckteils hintergreift, wobei ein Sicherungselement vorgesehen ist, welches das Verbindungselement derart verschieblich umgreift, dass das Sicherungselement zwischen einer Lösestellung und einer Sicherungsstellung verschiebbar ist, in welcher Sicherungsstellung das Sicherungselement das Verbindungselement derart umgreift, dass ein Aufbiegen des Verbindungselementes im Bereich der Haltekante(n) unterbunden ist, und wobei das Verbindungselement in einer Zwischen- oder Kuppelstellung des Sicherungselementes zumindest bereichsweise derart über das Sicherungselement vorsteht, dass die Haltekante(n) beim Eindrücken des am Einsteckteil vorgesehenen Haltevorsprungs aufbiegbar ist/sind.

Aus der EP 605 801 B1 ist bereits eine lösbare Steckverbindung vorbekannt, die als Schlauchkupplung zum Verbinden von zwei Leitungsabschnitten einer Flüssigkeitsleitung dient. Die vorbekannte Steckverbindung weist ein hülsenförmiges Aufnahmeteil auf, in dessen Hülseninnenraum ein rohrförmiges Einsteckteil einführbar ist, das an seinem Außenumfang einen als umlaufenden Ringflansch ausgebildeten Haltevorsprung trägt. In Kupplungsstellung der vorbekannten Steckkupplung wird der Haltevorsprung nach dem Eindrücken des Einsteckteils in das Aufnahmeteil von nach innen gerichteten und elastisch auffederbaren Haltekanten eines Verbindungselementes hintergriffen. Die Haltekanten des aus hartelastischem Material hergestellten Verbindungselementes sind über V-förmig zusammengeführte Federstege untereinander verbunden und können durch Druckbeaufschlagung der zusammengeführten Stegendbereiche der Federstege derart aufgefedert werden, dass die Haltekanten von dem Haltevorsprung außer Eingriff kommen. Um die Position des Verbindungselementes zu sichern, sind an den zusammengeführten Stegendbereichen plattenförmige Drucktasten angeformt, die in Gebrauchsstellung jeweils durch eine komplementär ausgebildete Durchgriffsöffnung in der Umfangswandung des Verbindungselementes vorstehen. Es mag ein besonderer Vorteil sein, dass das mit dem einen Leitungsabschnitt verbundene Verbindungselement, das an dem anderen Leitungsabschnitt angreifende Einsteckteil und das Verbindungselement als Kunststoffspritzgussteile ausgebildet werden können. Die Herstellung dieser aufeinander abgestimmten Kunststoffformteile ist jedoch mit einem erheblichen Aufwand verbunden. Darüber hinaus besteht die Gefahr, dass übermäßige Belastungen, die auf das Verbindungselement und/oder das Einsteckteil quer zu deren Längserstreckung einwirken, zu einem Bruch zumindest eines dieser Kunststoffteile und zu unerwünschten Undichtigkeiten führen.

Aus der WO 02/079684 A1 ist bereits eine lösbare Steckverbindung der eingangs erwähnten Art vorbekannt, die ein rohrförmiges Einsteckteil hat, welches an seinem Außenumfang zumindest einen Haltevorsprung trägt und die ein hülsenförmiges Aufnahmeteil aufweist, dessen Innenraum zum Einführen des rohrförmigen Einsteckteiles bestimmt ist. Die vorbekannte Steckverbindung hat auch ein mit dem Aufnahmeteil verbundenes Verbindungselement, an dem wenigstens eine nach innen gerichtete Haltekante aufbiegbar oder aufschwenkbar gehalten ist, welche den Haltevorsprung nach dem Eindrücken des Einsteckteiles hintergreift. Die vorbekannte Steckverbindung weist auch ein Sicherungselement auf, das aus zwei, das Verbindungselement beidseitig umfassenden Seitenwänden sowie einer diese U-förmig haltenden Querwand besteht und das stirnseitig eine Stirnplatte trägt. An den der Stirnplatte des Sicherungselementes abgewandten Stirnrändern der Seitenwände sind Einführflächen angeformt, mit deren Hilfe das Sicherungselement am Verbindungselement querverschieblich geführt ist. Das am Verbindungselement querverschieblich geführte Sicherungselement ist zwischen einer Lösestellung und einer Sicherungsstellung querverschiebbar. Während in der Lösestellung eine an der Stirnplatte des Sicherungselementes vorgesehene Aussparung derart mit dem Innenraum des hülsenförmigen Aufnahmeteiles fluchtet, dass das Einsteckteil sich in das Aufnahmeteil einführen lässt, umgreift das Sicherungselement in der Sicherungsstellung das am Aufnahmeteil vorgesehene Verbindungselement derart, dass ein Aufbiegen des Verbindungselementes im Bereich der Haltekanten unterbunden ist.

Es besteht daher insbesondere die Aufgabe, eine mit reduziertem Aufwand herstellbare Steckverbindung der eingangs erwähnten Art zu schaffen, mit der eine verriegelbare, stabile und belastbare, gleichzeitig aber auch leicht lösbare Verbindung herstellbar ist.

Die erfindungsgemäße Lösung dieser Aufgabe besteht bei der Steckverbindung der eingangs erwähnten Art insbesondere darin, dass das Sicherungselement hülsenförmig ausgestaltet ist und das Verbindungselement axial verschieblich umgreift, und dass in der Lösestellung die axiale Schiebebewegung des Sicherungselementes in eine quer dazu orientierte Öffnungsbewegung der Haltekante(n) umsetzbar ist.

Die erfindungsgemäße Steckverbindung weist ein rohrförmiges Einsteckteil auf, das außenumfangsseitig zumindest einen Haltevorsprung trägt. Das Einsteckteil ist in den Hülseninnenraum eines hülsenförmigen Aufnahmeteiles einführbar. Das Aufnahmeteil ist mit einem Verbindungselement verbunden, das nach dem Eindrücken des Einsteckteiles in den Hülseninnenraum die lösbare Verbindung zwischen Aufnahmeteil und Einsteckteil zu sichern hat. Nach dem Eindrücken des Einsteckteiles wird der am Einsteckteil vorgesehene Haltevorsprung von zumindest einer nach innen gerichteten Haltekante hintergriffen, die am Verbindungselement aufbiegbar oder aufschwenkbar gehalten ist. Die erfindungsgemäße Steckverbindung weist ein hülsenförmiges Sicherungselement auf, welches das Verbindungselement derart verschieblich umgreift, dass das Sicherungselement zwischen einer Lösestellung und einer Sicherungsstellung verschiebbar ist. Während in der Lösestellung die axiale Schiebebewegung des Sicherungselementes in eine quer dazu orientierte Öffnungsbewegung der Haltekante(n) umsetzbar ist, welche die Haltekante(n) vom Haltevorsprung am Einsteckteil außer Eingriff bringt, umgreift in der Sicherungsstellung das Sicherungselement das Verbindungselement zumindest in einem Biege- oder Schwenkbereich derart, dass ein Aufbiegen des Verbindunselement im Bereich der Haltekante (n) mit Sicherheit unterbunden wird und die Haltekante(n) den Haltevorsprung auch unter hoher Last fest hintergreifen. Auch unter einer unkontrollierten Druckbeaufschlagung des Sicherungselementes in radialer Richtung vermag das Sicherungselement die feste und in axialer Richtung hochbelastbare Verbindung von Einsteckteil und Aufnahmeteil zu sichern. In einer Mittel- oder Kuppelstellung, die auf dem axialen Schiebeweg des Sicherungselementes zwischen der Sicherungsstellung und der Lösestellung vorgesehen ist, steht das Verbindungselement zumindest bereichsweise derart über das Sicherungselement vor, dass die Haltekante (n) beim Eindrücken des am Einsteckteil vorgesehenen Haltevorsprungs aufbiegbar ist/sind und den Haltevorsprung am Einsteckteil hintergreifen kann/können. In dieser Mittel- oder Kuppelstellung ist die erfindungsgemäße Steckverbindung bereits betriebssicher. Da die erfindungsgemäße Steckverbindung aus wenigen, mit geringem Aufwand zu fertigenden Bestandteilen besteht, ist sie vergleichsweise kostengünstig herstellbar.

Eine bevorzugte Weiterbildung gemäß der Erfindung sieht vor, dass die Steckverbindung als lösbare Schlauchverbindung ausgestaltet ist, dass zumindest am rohrförmigen Einsteckteil oder wenigstens am hülsenförmigen Aufnahmeteil ein Anschlussstutzen zum Aufschieben eines Schlauchendes einer flexiblen Schlauchleitung vorgesehen ist und dass das Aufnahmeteil sowie das Einsteckteil flüssigkeitsdicht miteinander verbindbar sind. Bei dieser weiterbildenden Ausführungsform kann das Einsteckteil oder das Aufnahmeteil zuströmseitig oder verbraucherseitig unverrückbar gehalten sein, während das jeweils andere Bauteil mit einer flexiblen Schlauchleitung verbunden ist. Eine bevorzugte Ausführungsform sieht jedoch vor, dass sowohl das Aufnahmeteil als auch das Einsteckteil mit einem Schlauchabschnitt einer flexiblen Schlauchleitung verbunden sind und dass diese flexible Schlauchleitung im Bereich der Steckverbindung bei Bedarf unterbrochen werden kann.

Um einen zwischen dem Außenumfang des Einsteckteiles und dem Innenumfang des Aufnahmeteiles eventuell verbliebenen Ringspalt flüssigkeitsdicht abdichten zu können, sieht eine bevorzugte Ausführungsform gemäß der Erfindung vor, dass zumindest am Außenumfang des Einsteckteils oder wenigstens am Innenumfang des Aufnahmeteils mindestens eine Ringnut vorgesehen ist, in welcher Ringnut eine Ringdichtung angeordnet ist.

Damit die Haltekanten den Haltevorsprung am Einsteckteil sicher und fest hintergreifen können, ist es vorteilhaft, wenn das Verbindungselement zumindest eine quer zur Eindrückrichtung orientierte Halteleiste hat, an der eine Haltekante vorgesehen ist.

Die Verbindung zwischen dem Aufnahmeteil und dem Einsteckteil lässt sich besonders gut und hoch belastbar sichern, wenn das Verbindungselement zumindest ein Paar Halteleisten hat, die auf gegenüberliegenden Seiten des Aufnahmeteiles vorgesehen sind.

Um die zumindest eine Haltekante sowohl in der Mittel- oder Kupplungsstellung als auch in der Lösestellung leicht aufbiegen oder aufschwenken zu können, ist es vorteilhaft, wenn die zumindest eine Halteleiste an wenigstens einem Verbindungsarm des Verbindungselementes gehalten ist, welcher Verbindungsarm in einem Biege- oder Schwenkbereich biegbar oder aufschwenkbar ausgestaltet ist.

Die hohe Funktionalität und die mit der erfindungsgemäßen Steckverbindung erreichbare sichere Verbindung wird begünstigt, wenn die zumindest eine Halteleiste an zwei Verbindungsarmen gehalten ist, welche Verbindungsarme an den Leistenendbereichen der ihnen zugeordneten Halteleiste angreifen.

Möglich ist es, das Aufnahmeteil und das Einsteckteil beispielsweise durch unrunde Querschnitte derart auszugestalten, dass das Einsteckteil nur in einer in Umfangsrichtung festgelegten Relativposition in das Aufnahmeteil eingedrückt werden kann. Die Handhabung der erfindungsgemäßen Steckverbindung wird jedoch wesentlich erleichtert, wenn das in dem Aufnahmeteil befindliche Einsteckteil frei drehbar, aber in axialer Richtung sicher und fest gehalten ist; bei der letztgenannten Ausführung ist es von Vorteil, wenn am Einsteckteil außenumfangsseitig ein umlaufender und vorzugsweise ringflanschartig ausgestalter Haltevorsprung vorgesehen ist.

Beim Eindrücken des Einsteckteiles in das Aufnahmeteil können die Halteleisten besonders gut vom Haltevorsprung überwunden werden, bis der Haltevorsprung von den Haltekanten hintergriffen wird, wenn an jeder Halteleiste eine Auflaufschräge vorgesehen ist, welcher eine Eindrückbewegung des Einsteckteiles in eine Aufbiege- oder Aufschwenkbewegung des zumindest einen Verbindungsarmes umsetzt.

Vorteilhaft ist es, wenn eine Kulissenführung vorgesehen ist, die eine axiale Schiebebewegung des Sicherungselementes in eine quer dazu orientierte Aufbiege- oder Aufschwenkbewegung der Haltekanten umsetzt, und wenn die Kulissenführung zumindest einen, am Innenumfang des Sicherungselementes vorgesehenen Kulissenvorsprung hat, welcher mit wenigstens einer ihm zugeordneten Kulissenbahn am Verbindungselement zusammenwirkt. Dabei wird ein gleichmäßiges Aufbiegen oder Aufschwenken der Halteleisten und ein leichtes Lösen der Haltekanten vom Haltevorsprung am Einsteckteil begünstigt, wenn an den benachbarten Verbindungsarmen von zumindest zwei, auf gegenüberliegenden Seiten des Aufnahmeteiles vorgesehenen Halteleisten jeweils eine Kulissenbahn vorgesehen ist, und wenn die Kulissenbahnen mit einem ihnen zugeordneten Kulissenvorsprung zusammenwirken. Dabei sieht eine besonders einfach zu handhabende und bevorzugte Ausführungsform gemäß der Erfindung vor, dass auf gegenüberliegenden Innenumfangsseiten des Sicherungselementes jeweils ein Kulissenvorsprung vorgesehen ist, und wenn diese Kulissenvorsprünge jeweils mit einem Paar einander zugeordneter Kulissenbahnen zusammenwirken.

Um dem Anwender insbesondere die Sicherungsstellung deutlich zu signalisieren, ist es vorteilhaft, wenn die Halteleisten außenseitig jeweils eine Einsenkung haben, in welchen Einsenkungen jeweils zumindest ein zugeordneter und am Innenumfang des Sicherungselementes vorgesehener Rastvorsprung außenseitig einrastet. Damit die Verrastung des Rastvorsprungs in der Einsenkung besonders deutlich spürbar wird und damit dazu die Einsenkung auch ohne eine größere Materialschwächung der Halteleisten ausreichend tief ausgestaltet werden kann, ist es zweckmäßig, wenn die Halteleisten an ihrer Außenseite zumindest wenigstens bereichsweise eine quer zur Eindrückrichtung orientierte Wölbung aufweisen, und wenn die Einsenkung der Halteleiste vorzugsweise mittig im Bereich der Wölbung(en) vorgesehen ist.

Um das Verbindungselement besonders fest und belastbar am Aufnahmeteil befestigen zu können, sieht eine bevorzugte Ausführungsform gemäß der Erfindung vor, dass die Verbindungsarme an ihren den Halteleisten abgewandten Armenden mit einem Haltering vorzugsweise einstückig verbunden sind, welcher Haltering in einer Einsenkung am Außenumfang des Aufnahmeteiles insbesondere in axialer Richtung unverrückbar gehalten ist.

Das Sicherungselement lässt sich besonders gut am Aufnahmeteil sowie dem damit verbundenen Verbindungselement verschieblich führen, wenn das Sicherungselement zumindest innenumfangsseitig einen im wesentlichen rechteckigen Querschnitt hat und wenn das Verbindungselement außenumfangsseitig einen im wesentlichen rechteckigen Hüllkreis definiert, welcher Hüllkreis an den rechteckigen lichten Querschnitt des Sicherungselementes formangepasst ist.

Um leicht erkennbar signalisieren zu können, dass sich die erfindungsgemäße Steckverbindung noch nicht in ihrer Sicherungsstellung befindet, ist es vorteilhaft, wenn das Verbindungselement in der Zwischen- oder Kuppelstellung sichtbar zumindest bereichsweise über das Sicherungselement vorsteht und wenn dieser vorstehende Teilbereich des Verbindungselementes eine Markierung trägt, insbesondere in einer Signalfarbe eingefärbt ist. Kann der Anwender am Verbindungselement die Signalfarbe erkennen, ist für ihn auch erkennbar, dass sich die Steckverbindung vorerst nur in ihrer Zwischen- oder Kuppelstellung befindet und bei Bedarf erst noch in die Sicherungsstellung gebracht werden muss.

In diesem Zusammenhang kann es vorteilhaft sein, wenn das Verbindungselement in der Sicherungsstellung des Sicherungselementes zumindest weitgehend und vorzugsweise vollständig vom Sicherungselement überdeckt und umgriffen ist. Sobald das Sicherungselement das Verbindungselement zumindest nahezu vollständig überdeckt und umgreift, wird ein unbeabsichtigtes Lösen des Sicherungselementes aus dieser Sicherungsstellung vermieden. Gleichzeitig wird auch der vorstehende Teilbereich des Verbindungselementes, der eine Markierung trägt, derart überdeckt, dass dem Anwender keine Fehlinformation über die aktuelle Position des Sicherungselementes gegeben wird.

Da das Sicherungselement, das in der Sicherungsposition das Verbindungselement umgreift, seitlich geringfügig über die Außenkontur der Schlauchleitung vorstehen kann, besteht eventuell die Gefahr, dass das Sicherungselement unbeabsichtigt mit seinem vorstehenden Stirnrand an einem Hindernis hängenbleibt und von seiner Sicherungsposition in die Kuppelstellung oder gar in die Lösestellung bewegt wird. Um dieser Gefahr wirkungsvoll zu begegnen und um ein unbeabsichtigtes Verschieben des in der Sicherungsposition befindlichen Sicherungselementes in die Kuppelstellung oder gar in die Lösestellung zu verhindern, sieht eine besonders vorteilhafte Weiterbildung gemäß der Erfindung vor, dass am Einsteckteil eine Sicherungskappe gehalten ist, dass die Sicherungskappe zumindest bereichsweise über den Außenumfang des Sicherungselements vorsteht, und dass die Sicherungskappe in der Sicherungsstellung benachbart zu dem Sicherungselement angeordnet ist. Da bei dieser weiterbildenden Ausführungsform die Sicherungskappe am Einsteckteil gehalten ist, und da die Sicherungskappe zumindest bereichsweise über den Außenumfang des benachbarten Sicherungselementes vorsteht, wird ein Hängenbleiben des Sicherungselementes und ein unbeabsichtigtes Verschieben gar in die Lösestellung wirkungsvoll verhindert.

Dabei sieht eine besonders einfache und leicht herzustellende Ausführungsform gemäß der Erfindung vor, dass die Sicherungskappe als eine über den Außenumfang des Sicherungselementes bereichsweise vorstehende Ringscheibe ausgestaltet ist.

Um ein unbeabsichtigtes Lösen der mit dem erfindungsgemäßen Einstecksteil bewerkstelligten Verbindung auf jeden Fall zu verhindern, kann es zweckmäßig sein, wenn die Sicherungskappe eine an den Außenumfang des Sicherungselementes angepasste und allseits über den Außenumfang des Sicherungselementes vorstehende Außenkontur hat.

Dabei sieht eine bevorzugte Ausführungsform gemäß der Erfindung vor, dass die Sicherungskappe mit einem in Richtung zum Sicherungselement abgewinkelten Umfangsrand den benachbarten Stirnrandbereich des Sicherungselementes in Sicherungsposition übergreift.

Weiterbildungen gemäß der Erfindung ergeben sich aus der Zeichnung in Verbindung mit den Ansprüchen sowie der Beschreibung. Nachstehend wird die Erfindung anhand eines bevorzugten Ausführungsbeispiels noch näher beschrieben.

Es zeigt:
- Fig. 1:: eine in einem axialen Längsschnitt dargestellte lösbare Steckverbindung, die als Schlauchverbindung ausgestaltet ist, wobei der eine Schlauchabschnitt an einem Einsteckteil gehalten ist, während der andere Schlauchabschnitt mit einem Aufnahmeteil verbunden ist und wobei diese Bestandteile der Steckverbindung in einer auseinandergezogenen Position getrennt voneinander dargestellt sind,
- Fig. 2:: die Steckverbindung aus Figur 1 in einer Mittel- oder Kuppelstellung während des Eindrückens des rohrförmigen Einsteckteils in den Hülseninnenraum des hülsenförmigen Aufnahmeteils,
- Fig. 3:: die Steckverbindung aus Figur 1 und 2 in der Mittel- oder Kuppelstellung, nachdem das Einsteckteil derart in das Aufnahmeteil gedrückt wurde, dass ein am Einsteckteil vorgesehener Haltevorsprung von den Haltekanten eines mit dem Aufnahmeteil verbundenen Verbindungselementes hintergriffen wird,
- Fig. 4:: die Steckverbindung aus den Figuren 1 bis 3 in einer längsgeschnitten dargestellten Sicherungsstellung, in welcher ein hülsenförmiges Sicherungselement das Verbindungselement derart umgreift, dass ein Aufbiegen oder Ausschwenken der am Verbindungselement vorgesehenen Haltekanten unterbunden ist,
- Fig. 5:: die Steckverbindung aus den Figuren 1 bis 4 in einer Lösestellung, in welcher Lösestellung die axiale Schiebebewegung des Sicherungselementes in eine quer dazu orientierte Aufbiege- oder Aufschwenkbewegung der Haltekanten umsetzbar ist,
- Fig. 6:: die längsgeschnitten dargestellte Steckverbindung aus den Figuren 1 bis 5 in der ineinander gedrückten Mittel- oder Kuppelstellung von Einsteckteil und Aufnahmeteil, unmittelbar bevor das Sicherungselement in die Sicherungsstellung axial verschoben wird,
- Fig. 7:: das Verbindungselement und das daran verschieblich geführte Sicherungselement der in den Figuren 1 bis 6 gezeigten Steckverbindung in einem perspektivischen Längsschnitt,
- Fig. 8:: die Bestandteile aus Figur 7 in einem in Umfangsrichtung um 90° gedrehten perspektivischen Längsschnitt,
- Fig. 9:: die längsgeschnitten dargestellte Steckverbindung aus den Figuren 1 bis 8 in der Sicherungsstellung des Sicherungselementes,
- Fig. 10:: das Verbindungselement und das Sicherungselement der in den Figuren 1 bis 9 gezeigten Steckverbindung in einem perspektivischen Längsschnitt,
- Fig. 11:: die Bestandteile aus Figur 10 in einem in Umfangsrichtung um 90° gedrehten perspektivischen Längsschnitt,
- Fig. 12:: die längsgeschnitten dargestellte Steckverbindung aus den Figuren 1 bis 11 in der Lösestellung,
- Fig. 13:: die längsgeschnitten dargestellte Steckverbindung aus den Figuren 1 bis 12 in der in Figur 12 gezeigten Lösestellung,
- Fig. 14:: die Bestandteile aus Figur 13 in einem in Umfangsrichtung um 90° gedrehten perspektivischen Längsschnitt,
- Fig. 15:: das Sicherungselement der in den Figuren 1 bis 14 gezeigten Steckverbindung in einer Seitenansicht,
- Fig. 16:: das Sicherungselement aus Figur 15 in einer in Umfangsrichtung um 90° gedrehten Seitenansicht,
- Fig. 17:: das Sicherungselement aus Figur 15 und 16 in einem Längsschnitt durch Schnittebene C-C aus Figur 16,
- Fig. 18:: das Sicherungselement aus den Figuren 15 bis 17 in einer perspektivischen Draufsicht,
- Fig. 19:: das Sicherungselement aus den Figuren 15 bis 18 in einer Draufsicht,
- Fig. 20:: das vereinzelt dargestellte Verbindungselement der in den Figuren 1 bis 14 gezeigten Steckverbindung in einer Seitenansicht,
- Fig. 21:: das Verbindungselement aus Figur 20 in einer in Umfangsrichtung um 90° gedrehten Seitenansicht,
- Fig. 22:: das Verbindungselement aus den Figuren 20 und 21 in einem Längsschnitt durch Schnittebene D-D aus Figur 21,
- Fig. 23:: das Verbindungselement aus den Figuren 20 bis 22 in einer perspektivischen Seitenansicht,
- Fig. 24:: das Verbindungselement aus den Figuren 20 bis 23 in der Draufsicht,
- Fig. 25:: die Steckverbindungen aus den Figuren 1 bis 14 in einer Draufsicht, wobei auch die Schnittebene A-A der Längsschnitte gemäß den Figuren 1 bis 5 gezeigt ist,
- Fig. 26:: die Steckverbindungen aus den Figuren 1 bis 14 in einer Draufsicht, wobei auch die Schnittebene B-B gemäß der Längsschnitte der Figuren 6, 9 und 12 gezeigt sind,
- Fig. 27:: ein weiteres Ausführungsbeispiel der in den Fig. 1 bis 26 gezeigten Steckverbindung, wobei das hier in einem Teil-Längsschnitt in Sicherungsposition gezeigte Ausführungsbeispiel eine am Einsteckteil in Längsrichtung unverrückbar gehaltene und hier als Ringscheibe ausgestaltete Sicherungskappe hat, welche einem unbeabsichtigten Hängenbleiben und Verschieben des Sicherungselementes von der Sicherungsposition in die Kuppel- oder gar in die Lösestellung entgegenwirkt,
- Fig. 28:: das in Fig. 27 gezeigte Ausführungsbeispiel der Steckverbindung in einer perspektivischen Draufsicht,
- Fig. 29:: ein weiteres und ebenfalls in einem Teil-Längsschnitt gezeigtes Ausführungsbeispiel einer Steckverbindung, die eine Sicherungskappe hat, welche Sicherungskappe hier jedoch an den Außenumfang des Sicherungselementes formangepasst ist und allseits über den Außenumfang des Sicherungselementes seitlich vorsteht, und
- Fig. 30:: das in Fig. 29 gezeigte Ausführungsbeispiel der Steckverbindung in einer perspektivischen Draufsicht.

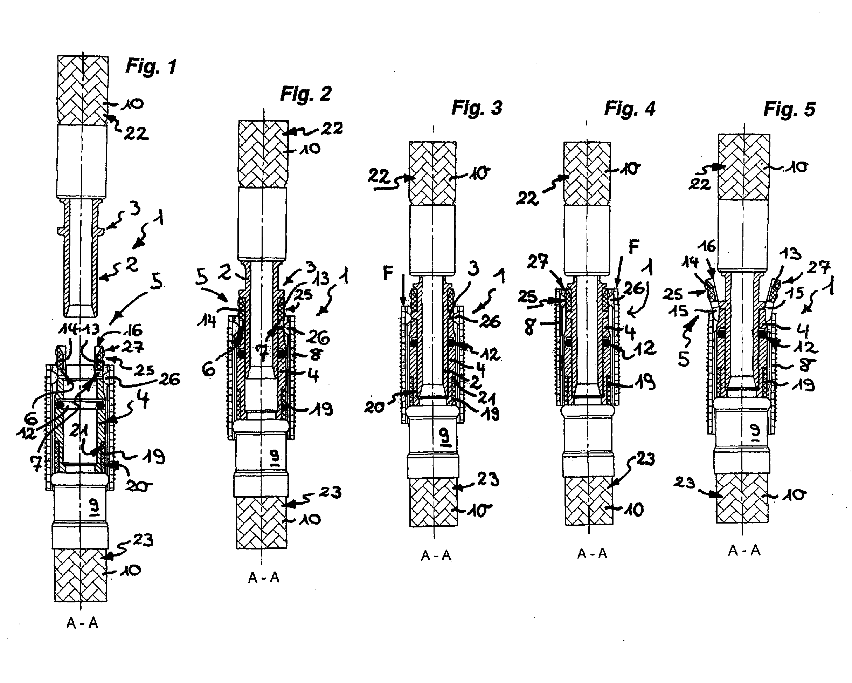

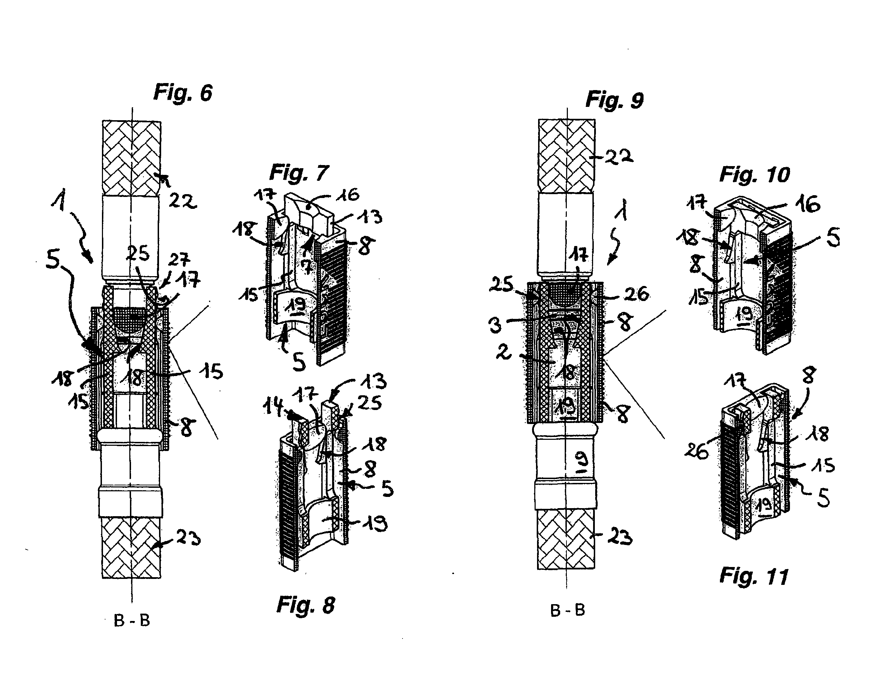

In den Fig. 1 bis 30 sind mehrere Ausführungsbeispiele einer lösbaren Steckverbindung 1 und deren wesentliche Bestandteile dargestellt. Jede dieser Steckverbindungen 1 weist ein rohrförmiges Einsteckteil 2 auf, das außenumfangsseitig zumindest einen Haltevorsprung 3 trägt. Das Einsteckteil 2 ist in den Hülseninnenraum eines hülsenförmigen Aufnahmeteiles 4 einführbar. Das Aufnahmeteil 4 ist mit einem Verbindungselement 5 verbunden, das nach dem Eindrücken des Einsteckteiles 2 in den Hülseninnenraum die lösbare Verbindung zwischen Aufnahmeteil 4 und Einsteckteil 2 herzustellen hat. Nach dem Eindrücken des Einsteckteiles 2 in das Aufnahmeteil 4 wird der am Einsteckteil 2 vorgesehene Haltevorsprung 3 von nach innen gerichteten Haltekanten 6, 7 hintergriffen, die am Verbindungselement 5 aufbiegbar oder aufschwenkbar gehalten sind. Die Steckverbindung 1 weist ein hülsenförmiges Sicherungselement 8 auf, welches das Verbindungselement 5 derart verschieblich umgreift, dass das Sicherungselement 8 zwischen einer in Figur 5 gezeigten Lösestellung und einer in Figur 4 abgebildeten Sicherungsstellung verschiebbar ist. Während in der Lösestellung die axiale Schiebbewegung des Sicherungselementes 8 in eine quer dazu orientierte Aufbiege- oder Aufschwenkbewegung der Haltekanten 6, 7 umsetzbar ist, welche die Haltekanten 6, 7 vom Haltevorsprung 3 am Einsteckteil 2 außer Eingriff bringt, umgreift in der Sicherungsstellung das Sicherungselement 8 das Verbindungselement 5 in einem Biege- oder Schwenkbereich derart, dass ein Aufbiegen des Verbindungselementes 5 im Bereich der Haltekanten 6, 7 mit Sicherheit unterbinden wird und die Haltekanten 6, 7 den Haltevorsprung 3 auch unter hoher Last fest hintergreifen. Auch unter einer unkontrollierten Kraftbeaufschlagung des Sicherungselementes 8 in radialer Richtung vermag das Sicherungselement 8 die feste und in axialer Richtung hoch belastbare Verbindung von Einsteckteil 2 und Aufnahmeteil 4 zu sichern. In einer in Figur 2 und 3 gezeigten Mittel- oder Kuppelstellung, in der die Verbindung bereits betriebssicher ist und den betriebsüblichen Belastungen standhält und die auf dem axialen Schiebeweg des Sicherungselementes zwischen der Sicherungsstellung und der Lösestellung vorgesehen ist, steht das Verbindungselement 5 zumindest bereichsweise derart über das Sicherungselement 8 vor, dass die Haltekanten 6, 7 beim Eindrücken des am Einsteckteil 2 vorgesehenen Haltevorsprungs 3 aufbiegbar sind und den Haltevorsprung 3 am Einsteckteil 2 hintergreifen können. Die über das Sicherungselement 8 vorstehenden Teilbereiche des Verbindungselementes 5, die in einer Signalfarbe eingefärbt sein können, signalisieren dabei, dass sich die Steckverbindung 1 noch nicht in ihrer Sicherungsstellung befindet. Dabei ist der Flächenschwerpunkt der Kontaktfläche des Haltevorsprungs 3 einerseits und der Haltekanten 6, 7 anderseits so gewählt, dass keine nach außen wirkenden Biegekräfte im Verbindungselement 5 und insbesondere in seinen Verbindungsarmen 15 entstehen. Da die erfindungsgemäße Steckverbindung 1 aus wenigen, mit geringem Aufwand zu fertigenden Bestandteilen besteht, ist sie vergleichsweise kostengünstig herstellbar.

Aus den Figuren 1 bis 6, 9 und 12 wird deutlich, dass die Steckverbindung 1 als lösbare Schlauchverbindung ausgebildet ist und dass dazu sowohl das Aufnahmeteil 4 als auch das Einsteckteil 3 mit einem Schlauchabschnitt 22 bzw. 23 einer flexiblen Schlauchleitung 10 verbunden sind. Die Schlauchabschnitte 22 und 23 der Schlauchleitung sind hier durch ein außenseitiges Metallgeflecht 11 verstärkt.

In den Figuren 1 bis 5 ist erkennbar, dass am Innenumfang des Aufnahmeteiles 4 eine Ringnut vorgesehen ist, in der eine Ringdichtung 12 angeordnet ist, welche den Ringspalt zwischen dem Aufnahmeteil 4 und dem darin eingeführten Einsteckteil 2 flüssigkeitsdicht abdichtet.

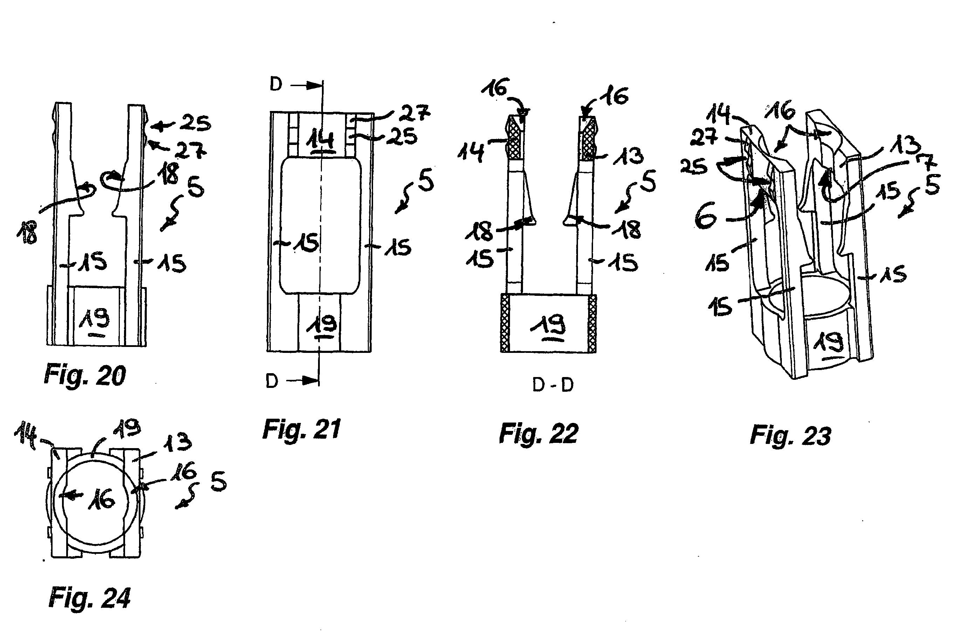

Das Verbindungselement 5 der Steckverbindung 1 ist in den Figuren 20 bis 24 näher dargestellt. Das Verbindungselement 5, dass beispielsweise aus gegebenenfalls auch verstärktem Kunststoff hergestellt sein kann, weist ein Paar quer zur Eindrückrichtung orientierte Halteleisten 13, 14 auf, an denen jeweils eine Haltekante 6, 7 vorgesehen ist. Die Halteleisten 13, 14 sind auf gegenüberliegenden Seiten des in den Figuren 1 bis 6, 9 und 12 sichtbaren Aufnahmeteiles 4 angeordnet. Die Halteleisten 13, 14 sind jeweils an zwei Verbindungsarmen 15 gehalten, die an den Leistenendbereichen der ihnen zugeordneten Halteleisten 13, 14 angreifen. An jeder Halteleiste 13, 14 ist eine Auflaufschräge 16 vorgesehen, die eine Eindrückbewegung des Einsteckteiles 2 nach dessen Einführen in das Aufnahmeteil 4 in eine Aufbiege- oder Aufschwenkbewegung der Verbindungsarme 15 umsetzt. Um die Rückstellbewegung der Verbindungsarme 15 zu unterstützen, sind diese vorzugsweise federelastisch aufbiegbar oder aufschwenkbar ausgestaltet.

Aus einem Vergleich der Figuren 2 und 3 wird deutlich, dass zum Ankuppeln von Einsteckteil 2 und Aufnahmeteil 4 zunächst das Einsteckteil 2 in den Hülseninnenraum des Aufnahmeteils 4 eingeführt werden muss, bis der am Einsteckteil 2 vorgesehene und hier als umlaufender Ringflansch ausgebildete Haltevorsprung 3 am oberen Längsrand der Halteleisten 13, 14 anliegt (vgl. Fig. 2). Durch weiteres Eindrücken des Einsteckteils 2 läuft der Haltevorsprung 3 auf die - hier wie ein längsgeschnittener Konus ausgestalteten - Auflaufschrägen 16 auf, derart, dass sich die Verbindungsarme 15 sowie die über die Halteleisten 13, 14 mit den Verbindungsarmen 15 verbundenen Haltekanten 6, 7 aufbiegen. Sobald die durch die untere Längsseite der Halteleisten 13, 14 gebildeten Haltekanten 6, 7 den Haltevorsprung 3 hintergreifen, wird die Verbindung zwischen dem Einsteckteil 2 und dem Aufnahmeteil 4 in axialer Richtung gehalten, wobei hier bereits eine Betriebssicherheit der Verbindung erreicht wird (vgl. Fig. 3).

Durch Verschieben des Sicherungselementes 8 lässt sich die Steckverbindung in die in Figur 4 gezeigte Sicherungsstellung bringen, in der das Sicherungselement 8 das Verbindungselement 5 auch im Biege- oder Schwenkbereich seiner Verbindungsarme 15 derart umgreift, dass ein Aufbiegen des Verbindungselementes 5 im Bereich der Haltekanten 6, 7 unterbunden ist. In dieser Sicherungsstellung wird die zwischen Einsteckteil 2 und Aufnahmeteil 4 hergestellte Verbindung auch bei einer radialen Kraftbeaufschlagung des beispielsweise aus, gegebenenfalls auch verstärktem Kunststoff gefertigten Sicherungselementes 8 gegen ein unbeabsichtigtes Lösen gesichert.

Um die Verbindung der vorzugsweise aus Metall und insbesondere aus Messing hergestellten Einsteck- und Aufnahmeteile 2, 4 wieder lösen zu können, ist eine Kulissenführung vorgesehen, die eine axiale Schiebebewegung des Sicherungselementes 8 in eine quer dazu orientierte Aufbiege- oder Aufschwenkbewegung der Haltekanten 6, 7 umsetzt. Diese Kulissenführung weist hier zwei, auf gegenüberliegenden Seiten am Sicherungselement 8 innenumfangsseitig vorgesehene Kulissenvorsprünge 17 auf, die beidseits jeweils mit durch eine an die Verbindungsarme 15 angeformten Wandungsabschnitt gebildete Kulissenbahn 18 zusammenwirken.

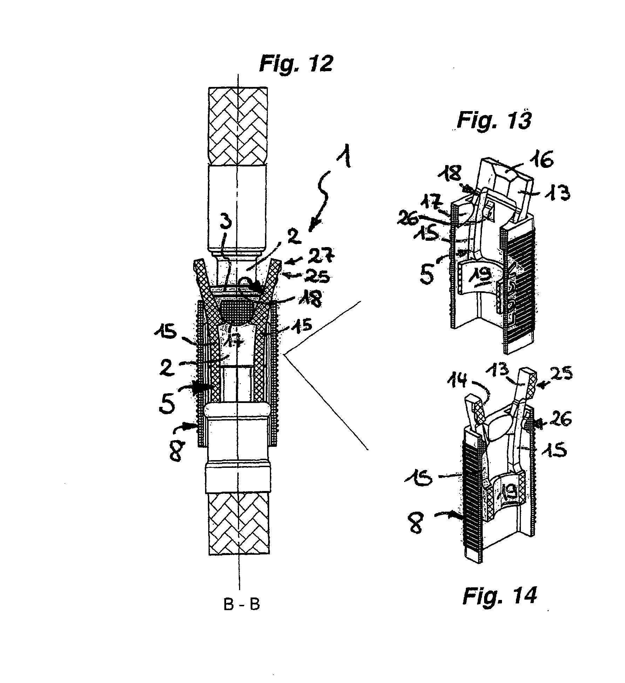

Aus einem Vergleich der Figuren 12 bis 14, welche die Steckverbindung 1 in der Lösestellung zeigen, wird deutlich, dass in der Lösestellung das Sicherungselement 8 derart zurückgeschoben ist, dass die mit den Kulissenbahnen 18 zusammenwirkenden Kulissenvorsprünge 17 die bereichsweise über das Sicherungselement 8 vorstehenden Verbindungsarme 15 mit den daran angeformten Halteleisten 13, 14 derart nach außen aufbiegen, dass die Haltekannten 6, 7 vom Haltevorsprung 3 außer Eingriff kommen und die Steckverbindung 1 zwischen Einsteckteil 2 und Aufnahmeteil 4 gelöst werden kann.

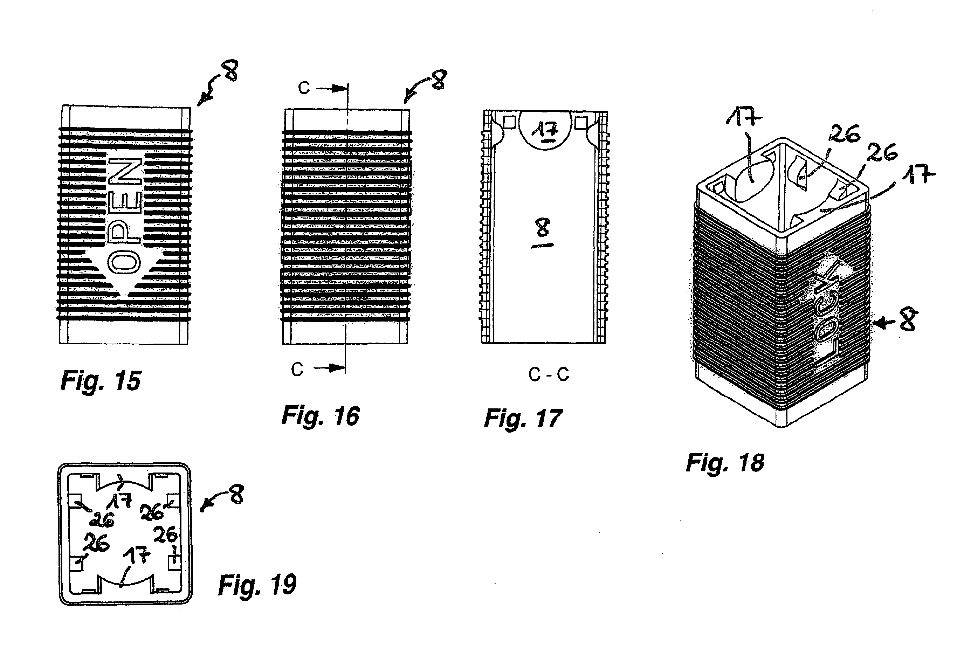

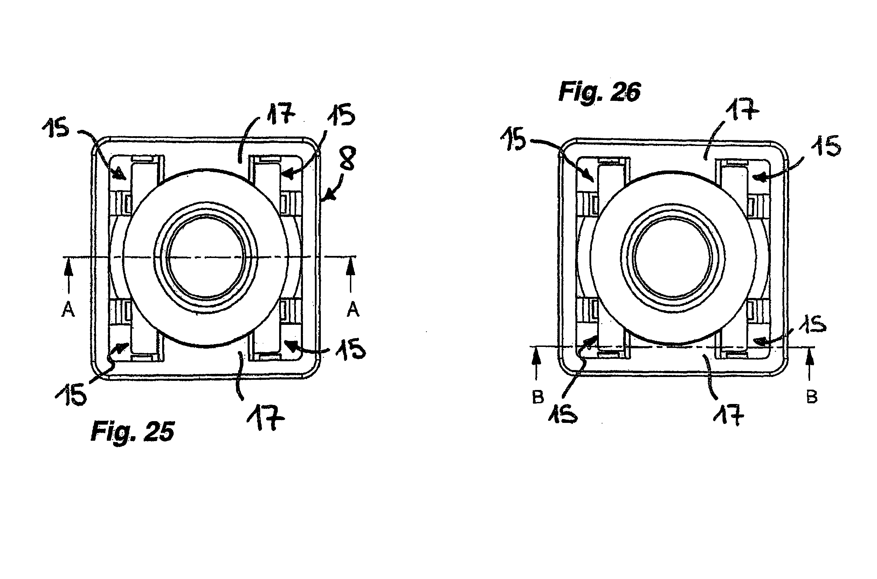

In den Figuren 1 bis 5 ist erkennbar, dass die Verbindungsarme 15 an ihren den Halteleisten 13, 14 abgewandten Armenden mit einem Haltering 19 einstückig verbunden sind, welcher Haltering 19 in einer gegebenenfalls auch als Ringnut ausgebildeten Einsenkung 20 am Außenumfang des Aufnahmeteiles 4 gehalten ist. Dieser Haltering 19 ist hier zwischen dem den Halteleisten 13, 15 zugewandten Ringabsatz 21 der Einsenkung 20 und einer Presshülse 9 eingespannt, welche Presshülse 9 den Schlauchabschnitt 23 auf einem als Schlauchnippel ausgebildeten Abschnitt des Aufnahmeteiles 4 hält. Dabei wird das Aufnahmeteil 4 von der Seite der Verbindungsarme 15 aus durch den Haltering 19 geschoben, bis der Haltering 19 am Ringabsatz 21 anschlägt. Aus den Figuren 15 bis 19 ist erkennbar, dass das Sicherungselement 8 zumindest innenumfangsseitig einen im Wesentlichen rechteckigen lichten Querschnitt hat. Aus einem Vergleich der Figuren 15 bis 19 einerseits und 20 bis 24 andererseits und aus den in Figur 25 und 26 gezeigten Draufsichten ist erkennbar, dass das Verbindungselement 5 außenumfangsseitig einen im wesentlichen rechteckigen Hüllkreis definiert, welcher Hüllkreis an den rechteckigen lichten Querschnitt des Sicherungselements 8 formangepasst ist. Durch diese komplementär unrunde Ausgestaltung von Sicherungselement 8 und Verbindungselement 5 wird sichergestellt, dass das Sicherungselement 8 am Verbindungselement 5 drehfest, aber in axialer Richtung verschieblich geführt ist.

Aus den Figuren 20 bis 24 und insbesondere dort aus den Figuren 22 und 23 wird deutlich, dass die Halteleisten 13, 14 außenseitig jeweils eine Einsenkung 25 haben, in welche Einsenkung 25 jeweils zumindest ein zugeordneter und am Innenumfang des Sicherungselementes vorgesehener Rastvorsprung 26 in Sicherungsstellung einrastet (vgl. Fig. 4). Damit der Anwender das Einrasten der Steckverbindung in ihre Sicherungsstellung besonders gut erkennen kann, und damit die Einsenkung 25 besonders tief ausgestaltet werden kann, ohne die Halteleisten 13, 14 zu schwächen, weisen die Halteleisten 13, 14 an ihrer Außenseite zumindest bereichsweise quer zur Eindrückrichtung orientierte Wölbungen 27 auf. Dabei sind die Einsenkungen 25 der Halteleisten 13, 14 etwa mittig im Bereich der Wölbungen 27 vorgesehen.

In den Fig. 3 und 4 ist erkennbar, dass das in Sicherungsposition das Verbindungselement 5 umgreifende Sicherungselement 8 seitlich geringfügig über die Außenkontur der Schlauchleitung 10 vorsteht. Dabei besteht die Gefahr, dass das Sicherungselement 8 unbeabsichtigt mit seinem vorstehenden Stirnrand an einem Hindernis hängenbleibt und von seiner Sicherungsposition in die Kuppelstellung oder gar in die Lösestellung bewegt wird.

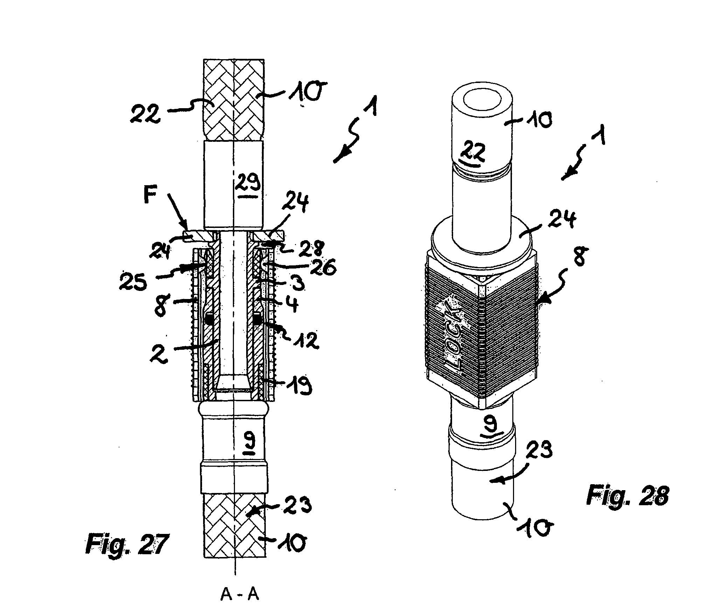

Um diesem Risiko zu begegnen, weisen die in den Fig. 27 bis 30 gezeigten Ausführungsbeispiele der Steckverbindung 1 eine Sicherungskappe 24 auf, die am Einsteckteil 2 in dessen Längsrichtung unverrückbar gehalten ist. Diese Sicherungskappe 24 steht zumindest bereichsweise derart über den Außenumfang des Sicherungselementes 8 vor, dass einem unbeabsichtigten Hängenbleiben des Sicherungselementes 8 und einem unerwünschten Verschieben von der Sicherungsposition in die Kuppelstellung oder gar in die Lösestellung entgegengewirkt wird.

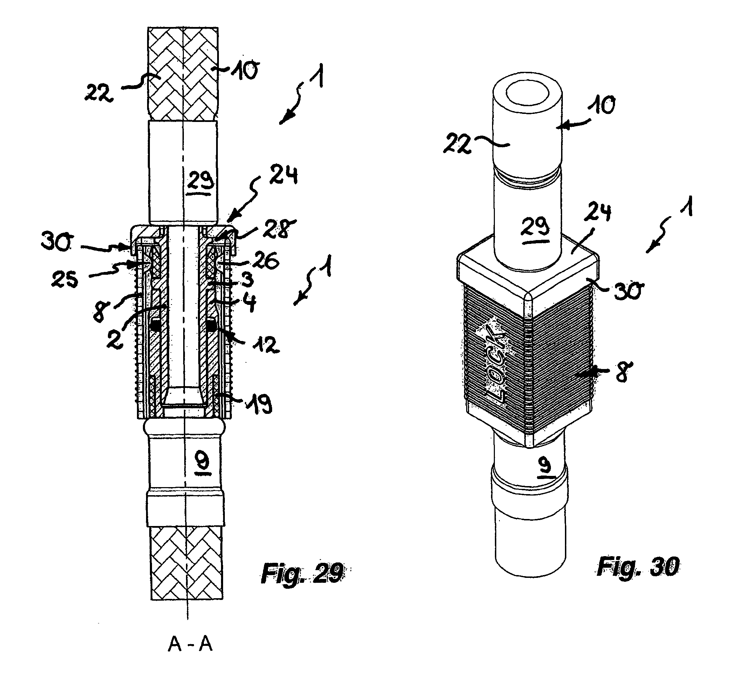

In den Fig. 27 und 29 ist erkennbar, dass am Einsteckteil 2 mit Abstand vom Haltevorsprung 3 ein Absatz 28 vorgesehen ist. Zwischen dem Absatz 28, der vorzugsweise als umlaufender Ringabsatz ausgestaltet ist, und einer Quetschhülse 29, die das Schlauchende des Schlauchabschnittes 22 auf dem Einsteckteil 2 hält, ist die Sicherungskappe 24 in Längsrichtung des Einsteckteils 2 unverrückbar gehalten.

Bei dem in den Fig. 27 und 28 gezeigten Ausführungsbeispiel ist die Sicherungskappe 24 als eine zumindest bereichsweise über den Außenumfang des benachbarten Sicherungselementes 8 vorstehende und hier außenumfangsseitig kreisrunde Ringscheibe ausgestaltet.

Demgegenüber weist die Sicherungskappe 24 des in den Fig. 29 und 30 gezeigten Ausführungsbeispieles eine an den vorzugsweise rechteckigen und hier quadratischen Außenumfang des Sicherungselementes 8 formangepasste Außenkontur auf und steht allseits über den Außenumfang des Sicherungselementes 8 vor. Dabei übergreift die Sicherungskappe 24 des in den Fig. 29 und 30 gezeigten Ausführungsbeispieles mit einem in Richtung zum Sicherungselement 8 abgewinkelten Umfangsrand 30 den benachbarten Stirnrandbereich des Sicherungselementes 8 derart, dass sich das Sicherungselement 8 nicht unbeabsichtigt verhaken und damit auch nicht aus der Sicherungsposition lösen kann.

Im Übrigen entsprechen die in den Fig. 27 bis 30 gezeigten Ausführungsbeispiele der Steckverbindung 1 der bereits in den Fig. 1 bis 26 beschriebenen Ausführung.

### Bezugszeichenliste

- 1: Steckverbindung
- 2: Einsteckteil
- 3: Haltevorsprung (am Einsteckteil 2)
- 4: Aufnahmeteil
- 5: Verbindungselement
- 6: Haltekante
- 7: Haltekante
- 8: Sicherungselement
- 9: Presshülse
- 10: Schlauchleitung (mit den Schlauchabschnitten 22 und 23)
- 11: Metallgeflecht
- 12: Ringdichtung
- 13: Halteleiste
- 14: Halteleiste
- 15: Verbindungsarme
- 16: Auflaufschräge
- 17: Kulissenvorsprung (innenumfangsseitig am Sicherungselement 8)
- 18: Kulissenbahnen (an den Verbindungsarmen 15)
- 19: Haltering (des Verbindungselementes 5)
- 20: Einsenkung
- 21: Ringabsatz (der Einsenkung 20)
- 22: Schlauchabschnitt (am Einsteckteil 2)
- 23: Schlauchabschnitt (am Aufnahmeteil 4)
- 24: Sicherungskappe (am Einsteckteil 2)
- 25: Einsenkung
- 26: Rastvorsprung (umfangsseitig am Sicherungselement 8)
- 27: Wölbung
- 28: Absatz (am Einsteckteil 2)
- 29: Quetschhülse (am Einsteckteil 2)
- 30: Umfangsrand (an der Sicherungskappe 24 des Ausführungsbeispiels gemäß Fig. 29 und 30)

## Patentansprüche

1. Lösbare Steckverbindung (1) mit einem rohrförmigen Einsteckteil (2), das an seinem Außenumfang zumindest einen Haltevorsprung (3) trägt, mit einem hülsenförmigen Aufnahmeteil (4), dessen Innenraum zum Einführen des rohrförmigen Einsteckteiles (2) bestimmt ist und mit einem mit dem Aufnahmeteil (4) verbundenen Verbindungselement (5), an dem wenigstens eine nach innen gerichtete Haltekante (6, 7) aufbiegbar oder aufschwenkbar gehalten ist, welche den Haltevorsprung (3) nach dem Eindrücken des Einsteckteils (2) hintergreift, wobei ein Sicherungselement (8) vorgesehen ist, welches (8) das Verbindungselement (5) derart verschieblich umgreift, dass das Sicherungselement (8) zwischen einer Lösestellung und einer Sicherungsstellung verschiebbar ist, in welcher Sicherungsstellung das Sicherungselement (8) das Verbindungselement (5) derart umgreift, dass ein Aufbiegen des Verbindungselements (5) im Bereich der Haltekante(n) (6, 7) unterbunden ist, und wobei das Verbindungselement (5) in einer Zwischen- oder Kuppelstellung des Sicherungselementes (8) zumindest bereichsweise derart über das Sicherungselement (8) vorsteht, dass die Haltekante (n) (6, 7) beim Eindrücken des am Einsteckteil (2) vorgesehenen Haltevorsprungs (3) aufbiegbar ist/sind, **dadurch gekennzeichnet, dass** das Sicherungselement (8) hülsenförmig ausgestaltet ist und das Verbindungselement (5) axial verschieblich umgreift, und dass in der Lösestellung die axiale Schiebebewegung des Sicherungselementes (8) in eine quer dazu orientierte Öffnungsbewegung der Haltekante(n) (6, 7) umsetzbar ist.

2. Steckverbindung nach Anspruch 1, **dadurch gekennzeichnet, dass** die Steckverbindung (1) als lösbare Schlauchverbindung ausgestaltet ist, dass zumindest am rohrförmigen Einsteckteil (2) oder wenigstens am hülsenförmigen Aufnahmeteil (4) ein Anschlussstutzen zum Aufschieben eines Schlauchendes einer flexiblen Schlauchleitung vorgesehen ist und dass das Aufnahmeteil (4) sowie das Einsteckteil (2) flüssigkeitsdicht miteinander verbindbar sind.

3. Steckverbindung nach Anspruch 1 oder 2, **dadurch gekennzeichnet, dass** zumindest am Außenumfang des Einsteckteils (2) oder wenigstens am Innenumfang des Aufnahmeteils (4) mindestens eine Ringnut vorgesehen ist, in welcher Ringnut eine Ringdichtung (12) angeordnet ist.

4. Steckverbindungen nach einem der Ansprüche 1 bis 3, **dadurch gekennzeichnet, dass** das Verbindungselement (5) zumindest eine quer zur Eindrückrichtung orientierte Halteleiste (13, 14) hat, an der (13, 14) eine Haltekante (6, 7) vorgesehen ist.

5. Steckverbindungen nach einem der Ansprüche 1 bis 4, **dadurch gekennzeichnet, dass** das Verbindungselement (5) zumindest ein Paar Halteleisten (13, 14) hat, die (13, 14) auf gegenüberliegenden Seiten des Aufnahmeteils (4) vorgesehen sind.

6. Steckverbindung nach einem der Ansprüche 4 bis 5, **dadurch gekennzeichnet, dass** die zumindest eine Halteleiste (13, 14) an wenigstens einem Verbindungsarm (15) des Verbindungselementes (5) gehalten ist, welcher Verbindungsarm (15) in einem Biege- oder Schwenkbereich biegbar oder schwenkbar ausgestaltet ist.

7. Steckverbindung nach einem der Ansprüche 4 bis 6, **dadurch gekennzeichnet, dass** die zumindest eine Halteleiste (13, 14) an zwei Verbindungsarmen (15) gehalten ist, welche Verbindungsarme (15) an den Leistenendbereichen der ihnen zugeordneten Halteleiste (13, 14) angreifen.

8. Steckverbindungen nach einem der Ansprüche 1 bis 7, **dadurch gekennzeichnet, dass** am Einsteckteil (2) außenumfangsseitig ein umlaufender und vorzugsweise ringflanschartig ausgestalteter Haltevorsprung (3) vorgesehen ist.

9. Steckverbindungen nach einem der Ansprüche 6 bis 8, **dadurch gekennzeichnet, dass** an jeder Halteleiste (13, 14) eine Auflaufschräge (16) vorgesehen ist, welche (16) eine Eindrückbewegung des Einsteckteiles (2) in eine Aufbiege- oder Aufschwenkbewegung des zumindest einen Verbindungsarmes (15) umsetzt.

10. Steckverbindung nach einem der Ansprüche 1 bis 9, **dadurch gekennzeichnet, dass** eine Kulissenführung vorgesehen ist, die eine axiale Schiebebewegung des Sicherungselementes (8) in eine quer dazu orientierte Aufbiege- oder Aufschwenkbewegung der Haltekanten (6, 7) umsetzt, und dass die Kulissenführung zumindest einen, am Innenumfang des Sicherungselementes (8) vorgesehenen Kulissenvorsprung (17) hat, welcher (17) mit wenigstens einer ihm zugeordneten Kulissenbahn (18) am Verbindungselement (5) zusammenwirkt.

11. Steckverbindung nach einem der Ansprüche 4 bis 10, **dadurch gekennzeichnet, dass** an den benachbarten Verbindungsarmen (15) von zumindest zwei, auf gegenüberliegenden Seiten des Aufnahmeteiles (4) vorgesehenen Halteleisten (13, 14) jeweils eine Kulissenbahn (18) vorgesehen ist und dass die Kulissenbahnen (18) mit einem ihnen zugeordneten Kulissenvorsprung (17) zusammenwirken.

12. Steckverbindung nach einem der Ansprüche 1 bis 11, **dadurch gekennzeichnet, dass** auf gegenüberliegenden Innenumfangsseiten des Sicherungselementes (8) jeweils ein Kulissenvorsprung (17) vorgesehen ist und dass diese Kulissenvorsprünge (17) jeweils mit einem Paar einander zugeordneter Kulissenbahnen (18) zusammenwirken.

13. Steckverbindung nach einem der Ansprüche 4 bis 12, **dadurch gekennzeichnet, dass** die Halteleisten (13, 14) außenseitig jeweils eine Einsenkung (25) haben, in welche Einsenkungen (25) jeweils zumindest ein zugeordneter und am Innenumfang des Sicherungselementes (8) vorgesehener Rastvorsprung (26) in Sicherungsstellung einrastet.

14. Steckverbindung nach Anspruch 13, **dadurch gekennzeichnet, dass** die Halteleisten (13, 14) an ihrer Außenseite zumindest bereichsweise wenigstens eine quer zur Eindrückrichtung orientierte Wölbung (27) aufweisen, und dass die Einsenkungen (25) der Halteleisten (13, 14) vorzugsweise mittig im Bereich der Wölbung(en) (27) vorgesehen ist.

15. Steckverbindung nach einem der Ansprüche 6 bis 14, **dadurch gekennzeichnet, dass** die Verbindungsarme (15) an ihren den Halteleisten (13, 14) abgewandten Armenden mit einem Haltering (19) vorzugsweise einstückig verbunden sind, welcher Haltering (19) in einer Einsenkung (20) am Außenumfang des Aufnahmeteiles (4) insbesondere in axialer Richtung unverrückbar gehalten ist.

16. Steckverbindung nach einem der Ansprüche 1 bis 15, **dadurch gekennzeichnet, dass** das Sicherungselement (8) zumindest innenumfangsseitig einen im wesentlichen rechteckigen Querschnitt hat und dass das Verbindungselement (5) außenumfangsseitig einen im wesentlichen rechteckigen Hüllkreis definiert, welcher Hüllkreis an den rechteckigen lichten Querschnitt des Sicherungselementes (8) formangepasst ist.

17. Steckverbindung nach einem der Ansprüche 1 bis 16, **dadurch gekennzeichnet, dass** das Verbindungselement (5) in der Zwischen- oder Kuppelstellung zumindest bereichsweise sichtbar über das Sicherungselement (8) vorsteht, und dass dieser vorstehende Teilbereich des Verbindungselementes (5) eine Markierung trägt, insbesondere in einer Signalfarbe eingefärbt ist.

18. Steckverbindung nach einem der Ansprüche 1 bis 17, **dadurch gekennzeichnet, dass** das Verbindungselement (5) in der Sicherungsstellung des Sicherungselementes (8) zumindest weitgehend und vorzugsweise vollständig vom Sicherungselement (8) überdeckt und umgriffen ist.

19. Steckverbindung nach einem der Ansprüche 1 bis 18, **dadurch gekennzeichnet, dass** am Einsteckteil (2) eine Sicherungskappe (24) gehalten ist, das die Sicherungskappe (24) zumindest bereichsweise über den Außenumfang des Sicherungselementes (8) vorsteht, und dass die Sicherungskappe (24) in der Sicherungsstellung benachbart zu dem Sicherungselement (8) angeordnet ist.

20. Steckverbindung nach Anspruch 19, **dadurch gekennzeichnet, dass** die Sicherungskappe (24) als eine über den Außenumfang des Sicherungselementes (8) zumindest bereichsweise vorstehende Ringscheibe ausgestaltet ist.

21. Steckverbindung nach Anspruch 19 oder 20, **dadurch gekennzeichnet, dass** die Sicherungskappe (24) eine an den Außenumfang des Sicherungselementes (8) angepasste und allseits über den Außenumfang des Sicherungselementes (8) vorstehende Außenkontur hat.

22. Steckverbindung nach einem der Ansprüche 19 bis 21, **dadurch gekennzeichnet, dass** die Sicherungskappe (24) mit einem in Richtung zum Sicherungselement (8) abgewinkelten Umfangsrand (30) den benachbarten Stirnrandbereich des Sicherungselementes (8) übergreift.

## Claims

1. Detachable plug connection (1) comprising a tubular insert part (2) which carries at least one retaining protrusion (3) on the outer circumference thereof, a sleeve-shaped receiving part (4), the interior of which is intended for the insertion of the tubular insert part (2), and a connecting element (5) connected to the receiving part (4), on which connecting element at least one inwardly directed retaining edge (6, 7) is held in a bendable or pivotable manner, said retaining edge engaging behind the retaining protrusion (3) upon pressing-in of the insert part (2), wherein a locking element (8) is provided which engages around the connecting element (5) in a movable manner such that the locking element (8) can be moved between a release position and a locking position, in said locking position the locking element (8) engages around the connecting element (5) such that bending of the connecting element (5) in the region of the retaining edge(s) (6, 7) is prevented, and wherein the connecting element (5), with the locking element (8) in an intermediate or coupling position, protrudes at least in regions over the locking element (8) so that the retaining edge(s) (6, 7) can be bent when the retaining protrusion (3) provided on the insert part (2) is pressed-in, **characterised in that** the locking element (8) is sleeve-shaped and engages around the connecting element (5) in an axially movable manner, and **in that** in the release position the axial pushing movement of the locking element (8) can be converted into an opening movement, oriented transversely thereto, of the retaining edge(s) (6, 7).

2. Plug connection as claimed in claim 1, **characterised in that** the plug connection (1) is formed as a detachable hose connection, **in that** a connecting piece for pushing-on a hose end of a flexible hose line is provided at least on the tubular insert part (2) or at least on the sleeve-shaped receiving part (4), and **in that** the receiving part (4) as well as the insert part (2) can be connected together to be liquid-tight.

3. Plug connection as claimed in claim 1 or 2, **characterised in that** at least one annular groove, in which an annular seal (12) is arranged, is provided at least on the outer circumference of the insert part (2) or at least on the inner circumference of the receiving part (4).

4. Plug connections as claimed in any one of claims 1 to 3, **characterised in that** the connecting element (5) has at least one retaining strip (13, 14) which is oriented transversely with respect to the pressing-in direction and on which retaining strip (13, 14) a retaining edge (6, 7) is provided.

5. Plug connections as claimed in any one of claims 1 to 4, **characterised in that** the connecting element (5) has at least one pair of retaining strips (13, 14) provided on opposite sides of the receiving part (4).

6. Plug connection as claimed in any one of claims 4 to 5, **characterised in that** the at least one retaining strip (13, 14) is held on at least one connecting arm (15) of the connecting element (5), said connecting arm (15) being bendable or pivotable in a bend or pivot region.

7. Plug connection as claimed in any one of claims 4 to 6, **characterised in that** the at least one retaining strip (13, 14) is held on two connecting arms (15), said connecting arms (15) engaging the strip end regions of the retaining strip (13, 14) allocated thereto.

8. Plug connections as claimed in any one of claims 1 to 7, **characterised in that** a circumferential and preferably annular flange-like retaining protrusion (3) is provided on the outer circumference of the insert part (2).

9. Plug connections as claimed in any one of claims 6 to 8, **characterised in that** a run-up inclination (16), which converts a pressing-in movement of the insert part (2) into a bending or pivoting movement of the at least one connecting arm (15), is provided on each retaining strip (13, 14).

10. Plug connection as claimed in any one of claims 1 to 9, **characterised in that** a sliding guide is provided which converts an axial pushing movement of the locking element (8) into a bending or pivoting movement, oriented transversely thereto, of the retaining edges (6, 7), and **in that** the sliding guide has at least one sliding protrusion (17) which is provided on the inner circumference of the locking element (8) and interacts with at least one sliding path (18), allocated thereto, on the connecting element (5).

11. Plug connection as claimed in any one of claims 4 to 10, **characterised in that** a sliding path (18) is provided in each case on the adjacent connecting arms (15) of at least two retaining strips (13, 14) provided on opposite sides of the receiving part (4) and **in that** the sliding paths (18) interact with a sliding protrusion (17) allocated thereto.

12. Plug connection as claimed in any one of claims 1 to 11, **characterised in that** a sliding protrusion (17) is provided in each case on opposite sides of the inner circumference of the locking element (8), and **in that** these sliding protrusions (17) interact in each case with a pair of mutually allocated sliding paths (18).

13. Plug connection as claimed in any one of claims 4 to 12, **characterised in that** the retaining strips (13, 14) have on the outer side in each case an impression (25), and at least one allocated latching protrusion (26), which is provided on the inner circumference of the locking element (8), latches into said impressions (25) in the locking position in each case.

14. Plug connection as claimed in claim 13, **characterised in that** the retaining strips (13, 14) have on an outer side thereof at least in regions at least one curvature (27) which is oriented transversely with respect to the pressing-in direction, and **in that** the impressions (25) of the retaining strips (13, 14) are provided preferably centrally in the region of the curvature(s) (27).

15. Plug connection as claimed in any one of claims 6 to 14, **characterised in that** the connecting arms (15) are connected preferably integrally at arm ends thereof remote from the retaining strips (13, 14) to a retaining ring (19), said retaining ring (19) being held in an impression (20) on the outer circumference of the receiving part (4) so as to be immovable particularly in an axial direction.

16. Plug connection as claimed in any one of claims 1 to 15, **characterised in that** the locking element (8) has a substantially rectangular cross-section at least on the inner circumference-side, and **in that** the connecting element (5) defines a substantially rectangular envelope on the outer circumference-side, the shape of said envelope being adapted to that of the rectangular clear cross-section of the locking element (8).

17. Plug connection as claimed in any one of claims 1 to 16, **characterised in that** the connecting element (5) in the intermediate or coupling position protrudes at least in regions visibly over the locking element (8), and **in that** this protruding part region of the connecting element (5) carries a marking, in particular is coloured in a signal colour.

18. Plug connection as claimed in any one of claims 1 to 17, **characterised in that** the connecting element (5), with the locking element (8) in the locking position, is at least substantially and preferably completely covered and encompassed by the locking element (8).

19. Plug connection as claimed in any one of claims 1 to 18, **characterised in that** a locking cap (24) is held on the insert part (2), **in that** the locking cap (24) protrudes at least in regions over the outer circumference of the locking element (8), and **in that** the locking cap (24) is arranged in the locking position adjacent to the locking element (8).

20. Plug connection as claimed in claim 19, **characterised in that** the locking cap (24) is formed as a ring disk which protrudes over the outer circumference of the locking element (8) at least in regions.

21. Plug connection as claimed in claim 19 or 20, **characterised in that** the locking cap (24) has an outer contour which is adapted to the outer circumference of the locking element (8) and protrudes on all sides over the outer circumference of the locking element (8).

22. Plug connection as claimed in any one of claims 19 to 21, **characterised in that** the locking cap (24) engages over the adjacent end edge region of the locking element (8) by way of a circumferential edge (30) which is angled in the direction of the locking element (8).

## Revendications

1. Connexion par enfichage libérable (1) avec une partie d'engagement tubulaire (2), qui porte à sa périphérie extérieure au moins une saillie de retenue (3), avec une partie de réception en forme de douille (4), dont l'espace intérieur est destiné à l'introduction de la partie d'engagement tubulaire (2), et avec un élément de jonction (5) assemblé à la partie de réception (4), sur lequel au moins un bord de retenue (6, 7) orienté vers l'intérieur est maintenu de façon pliable ou inclinable, qui s'accroche derrière la saillie de retenue (3) après l'introduction de la partie d'engagement (2), dans laquelle il est prévu un élément de fixation (8), lequel (8) entoure l'élément de jonction (5) de façon coulissante, de telle manière que l'élément de fixation (8) puisse coulisser entre une position de libération et une position de fixation, position de fixation dans laquelle l'élément de fixation (8) entoure l'élément de jonction (5) d'une manière telle qu'un pliage de l'élément de jonction (5) dans la région du/des bord(s) de retenue (6, 7) soit empêché, et dans laquelle l'élément de jonction (5) est, dans une position intermédiaire ou de couplage de l'élément de fixation (8), saillant au moins localement au-dessus de l'élément de fixation (8), d'une manière telle que le/les bord(s) de retenue (6, 7) soit/soient pliable(s) lors de l'introduction de la saillie de retenue (3) prévue sur l'élément d'engagement (2), **caractérisée en ce que** l'élément de fixation (8) est configuré en forme de douille et entoure l'élément de jonction (5) de façon coulissante axialement et **en ce que**, dans la position de libération, le mouvement coulissant axial de l'élément de fixation (8) puisse être converti en un mouvement d'ouverture du/des bord(s) (6, 7) orienté transversalement à celui-ci.

2. Connexion par enfichage selon la revendication 1, **caractérisée en ce que** la connexion par enfichage (1) est configurée en connexion de tuyau flexible libérable, **en ce qu'**il est prévu au moins sur la partie d'engagement tubulaire (2) ou au moins sur la partie de réception en forme de douille (4) un embout de raccordement pour engager une extrémité de tuyau d'une conduite en tuyau flexible et **en ce que** la partie de réception (4) ainsi que la partie d'engagement (2) peuvent être assemblées l'une à l'autre de façon étanche au liquide.

3. Connexion pour enfichage selon la revendication 1 ou 2, **caractérisée en ce qu'**il est prévu, au moins sur la périphérie extérieure de la partie d'engagement (2) ou au moins sur la périphérie intérieure de la partie de réception (4), au moins une rainure annulaire, dans laquelle un joint annulaire (12) est disposé.

4. Connexion par enfichage selon l'une quelconque des revendications 1 à 3, **caractérisée en ce que** l'élément de jonction (5) comporte au moins une baguette de retenue (13, 14), orientée transversalement à la direction d'introduction, sur laquelle (13, 14) il est prévu un bord de retenue (6, 7).

5. Connexion par enfichage selon l'une quelconque des revendications 1 à 4, **caractérisée en ce que** l'élément de jonction (5) comporte au moins une paire de baguettes de retenue (13, 14) qui (13, 14) sont prévues sur des côtés opposés de la partie de réception (4).

6. Connexion par enfichage selon l'une quelconque des revendications 4 à 5, **caractérisée en ce que** ladite au moins une baguette de retenue (13, 14) est maintenue sur au moins un bras de jonction (15) de l'élément de jonction (5), bras de jonction (15) qui est pliable ou inclinable dans une zone de pliage ou de pivotement.

7. Connexion par enfichage selon l'une quelconque des revendications 4 à 6, **caractérisée en ce que** ladite au moins une baguette de retenue (13, 14) est maintenue sur deux bras de jonction (15), bras de jonction (15) qui s'accrochent aux zones d'extrémité de baguette de la baguette (13, 14) qui leur est associée.

8. Connexions par enfichage selon l'une quelconque des revendications 1 à 7, **caractérisées en ce qu'**il est prévu sur la partie d'engagement (2), du côté de la périphérie extérieure, une saillie de retenue (3) périphérique et, de préférence, réalisée en forme de bride annulaire.

9. Connexions par enfichage selon l'une quelconque des revendications 6 à 8, **caractérisées en ce qu'**il est prévu sur chaque baguette de retenue (13, 14) un chanfrein d'entrée (16), qui (16) convertit un mouvement d'introduction de la partie d'engagement (2) en un mouvement de pliage ou d'écartement dudit au moins un bras de jonction (15).

10. Connexion par enfichage selon l'une quelconque des revendications 1 à 9, **caractérisée en ce qu'**il est prévu un guidage à coulisse, qui convertit un mouvement coulissant axial de l'élément de fixation (8) en un mouvement de pliage ou d'écartement orienté transversalement à celui-ci des bords de retenue (6, 7) et **en ce que** le guidage à coulisse comporte au moins une saillie de coulisse (17) prévue sur la périphérie intérieure de l'élément de fixation (8), saillie (17) qui coopère avec une piste de coulisse (18) qui lui est associée au niveau de l'élément de jonction (5).

11. Connexion par enfichage selon l'une quelconque des revendications 4 à 10, **caractérisée en ce qu'**il est chaque fois prévu une piste de coulisse (18) sur les bras de jonction voisins (15) d'au moins deux baguettes de retenue (13, 14) prévues sur des côtés opposés de la partie de réception (4) et **en ce que** les pistes de coulisse (18) coopèrent avec une saillie de coulisse (17) qui leur est associée.

12. Connexion par enfichage selon l'une quelconque des revendications 1 à 11, **caractérisée en ce qu'**il est chaque fois prévu une saillie de coulisse (17) sur des côtés périphériques intérieurs opposés de l'élément de fixation (8) et **en ce que** ces saillies de coulisse (17) coopèrent respectivement avec une paire de pistes de coulisse (18) associées l'une à l'autre.

13. Connexion par enfichage selon l'une quelconque des revendications 4 à 12, **caractérisée en ce que** les baguettes de retenue (13, 14) présentent chacune du côté extérieur un enfoncement (25), enfoncements (25) dans lesquels s'engage respectivement, en position de fixation, au moins une saillie d'encliquetage (26) associée et prévue sur la périphérie intérieure de l'élément de fixation (8).

14. Connexion par enfichage selon la revendication 13, **caractérisée en ce que** les baguettes de retenue (13, 14) présentent sur leur côté extérieur, au moins localement, au moins une courbure (27) orientée dans la direction d'introduction, et **en ce que** les enfoncements (25) des baguettes de retenue (13, 14) sont prévus de préférence au centre dans la région de la/des courbure(s) (27).

15. Connexion par enfichage selon l'une quelconque des revendications 6 à 14, **caractérisée en ce que** les bras de jonction (15) sont assemblés, de préférence en une seule pièce, par leurs extrémités de bras opposées aux baguettes de retenue (13, 14), à une bague de retenue (19), laquelle bague de retenue (19) est retenue de façon immobile en particulier en direction axiale dans un enfoncement (20) à la périphérie extérieure de la partie de réception (4).

16. Connexion par enfichage selon l'une quelconque des revendications 1 à 15, **caractérisée en ce que** l'élément de fixation (8) présente, au moins sur le côté périphérique intérieur, une section transversale essentiellement rectangulaire et **en ce que** l'élément de jonction (5) définit, du côté périphérique extérieur, un cercle d'enveloppe essentiellement rectangulaire, lequel cercle d'enveloppe est adapté à la forme de la section transversale libre rectangulaire de l'élément de fixation (8).

17. Connexion par enfichage selon l'une quelconque des revendications 1 à 16, **caractérisée en ce que** l'élément de jonction (5) est saillant au-dessus de l'élément de fixation (8) de façon visible au moins localement dans la position intermédiaire ou de couplage et **en ce que** cette région partielle saillante de l'élément de jonction (5) porte un marquage, en particulier est coloré avec une couleur de signalement.

18. Connexion par enfichage selon l'une quelconque des revendications 1 à 17, **caractérisée en ce que** l'élément de jonction (5) est recouvert et entouré, dans la position de fixation de l'élément de fixation (8), au moins largement et de préférence entièrement par l'élément de fixation (8).

19. Connexion par enfichage selon l'une quelconque des revendications 1 à 18, **caractérisée en ce qu'**un chapeau de fixation (24) est maintenu sur la partie d'engagement (2), **en ce que** le chapeau de fixation (24) est saillant au moins localement au-dessus de la périphérie extérieure de l'élément de fixation (8) et **en ce que** le chapeau de fixation (24) est disposé dans la position de fixation à proximité de l'élément de fixation (8).

20. Connexion par enfichage selon la revendication 19, **caractérisée en ce que** le chapeau de fixation (24) est réalisé sous la forme d'un disque annulaire saillant au moins localement au-delà de la périphérie extérieure de l'élément de fixation (8).

21. Connexion par enfichage selon une des revendications 19 ou 20, **caractérisée en ce que** le chapeau de fixation (24) présente un contour extérieur adapté à la périphérie extérieure de l'élément de fixation (8) et saillant de tous les côtés au-delà de la périphérie extérieure de l'élément de fixation (8).

22. Connexion par enfichage selon l'une quelconque des revendications 19 à 21, **caractérisée en ce que** le chapeau de fixation (24) s'accroche, avec un bord périphérique (30) coudé en direction de l'élément de fixation (8), sur la région de bord frontale de l'élément de fixation (8) disposée à proximité.
